# EUROPÄISCHE PATENTANMELDUNG

(11) **EP 1 316 351 A2**
(43) Veröffentlichungstag der Anmeldung: **04.06.2003**
(21) Anmeldenummer: 02026642.5
(22) Anmeldetag: 29.11.2002
(51) Int. Cl.: B01D 53/14, B01D 53/74

(54) **Gasreinigung mit konditionierten Kondensaten**

(30) Priorität: 01.12.2001 DE 10159133
(71) Anmelder: Unger, Andreas, Dr., 03149 Forst (DE)
(72) Erfinder: Unger, Andreas, Dr., 03149 Forst (DE)
(74) Vertreter: Haschick, Gerald, Dipl.-Ing.

(57) **Zusammenfassung**

Das Verfahren dient der Durchführung der Gasreinigung vermittels von konditionierten Waschmedien, die nacheinander in Verfahrensschritten abgeschieden und ihrerseits einer verfahrensschrittbezogenen Reinigung und Konditionierung durch Absorptions- und Abscheidungsprozesse unterzogen bzw. ferner durch thermische Prozesse in einer bestimmten Zusammensetzung hergestellt werden.

## Beschreibung

Das Verfahren dient der Durchführung der Gasreinigung vermittels von konditionierten Waschmedien, die nacheinander in Verfahrensschritten abgeschieden und ihrerseits einer verfahrensschrittbezogenen Reinigung und Konditionierung durch Absorptions- und Abscheidungsprozesse unterzogen bzw. ferner durch thermische Prozesse in einer bestimmten Zusammensetzung hergestellt werden.

Dazu wird ein Schwelgas, bestehend aus Aliphaten, Aromaten, Olefinen, Wasser und anderen Inhaltsstoffen durch mehrere Gaswäschereinheiten geleitet und dabei jeweils mit einem Waschmedium beaufschlagt, das beim Betrieb der Gaswäschereinheiten aus den entstehenden Kondensaten gebildet und konditioniert wird. Aus dem Schwelgas entstehen die Kondensate, z. B. durch Temperaturabsenkung und Abscheidung.

Durch die stufenweise Abscheidung der Kondensate und deren Konditionierung zu Waschmedien in der Schaltung von Prozessfolgen werden definierte Eigenschaften der Waschmedien eingestellt, durch die die Aufnahmefähigkeit von Gasinhaltsstoffen erreicht werden kann. Die einzustellenden Eigenschaften der Medien bewirken dann die Trenn- und Abscheideprozesse und stellen mit der Funktion der Systeme die verfahrensgemäßen Gaseigenschaften ein.

Die Gaswäschereinheiten sind in einer Rohrleitungsschaltung angeordnete Apparate, in denen die Gaskomponenten, die dampfförmigen Komponenten und die Waschmedien als Flüssigkeiten nacheinander in innigen Kontakt gebracht, durch physikalische und chemische Prozesse behandelt und dann wieder voneinander getrennt werden. So finden in den Wäschereinheiten in Aufeinanderfolge Stoffübergangsprozesse Gas/Flüssig und Flüssig/Flüssig thermische und chemische Prozesse statt. In den Verdampfungs- und Kondensationsprozessen werden die Medien in Gas- und in Flüssigphasen behandelt. In den Absorptionsprozessen sind in der Regel Flüssigkeiten und Feststoffe beteiligt, wobei mehrere Flüssigkeitstrennprozesse von nicht mischbaren Phasen ablaufen und in einem Feststoffbett ein Kombinationsprozess Absorption/Spaltung wirksam wird.

Die Gaswäschereinheiten, in denen diese Prozesse ablaufen, werden von Waschmedien durchströmt, die durch Pumpenaggregate bewegt werden. Die Inhalte der Gaswäschereinheiten, die Anteile der Komponenten und die Prozesszustände werden verfahrensbedingt vorgegeben. Das Verfahren wird durch die Schaltung der Prozessfolge beschrieben. In jeweils einer Schaltung sind verfahrensbedingt eine oder mehrere Gaswäschereinheiten integriert und stehen insofern für verschiedene Waschmedien in der jeweils gewünschten Schaltung in Verbindung.

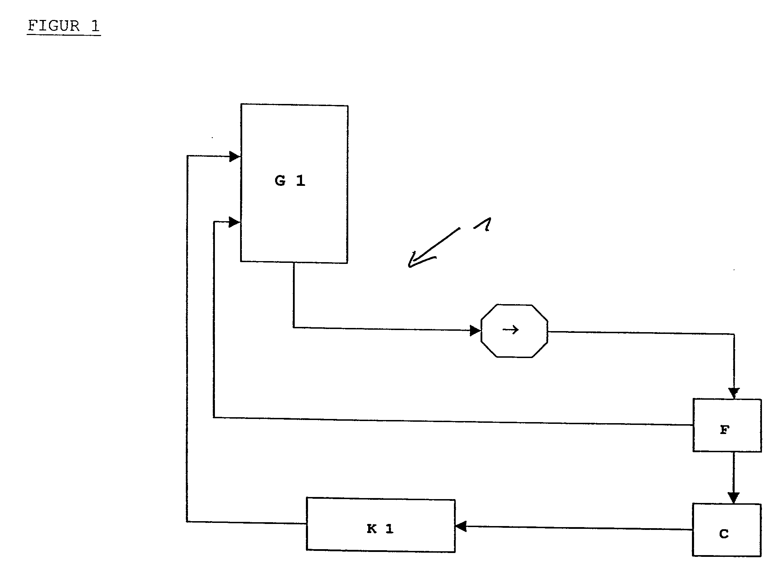

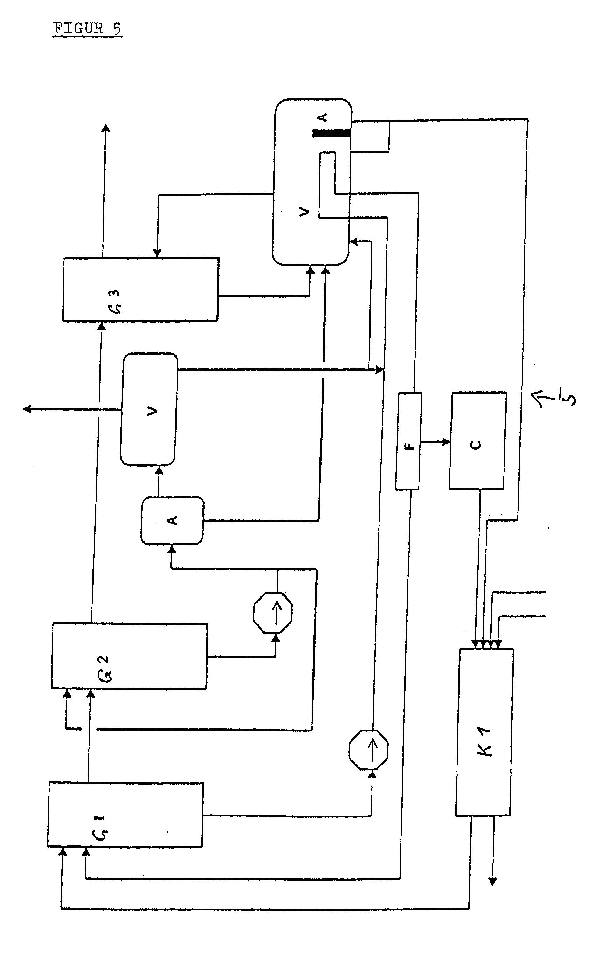

Im Folgenden werden die Schaltungen 1, 2, 3, 4 und 5 (Figuren 1 - 5) als Prozessfolge und die damit ausgeführten Verfahren beschrieben, welche sich in dem Gesamtprozess gemäß Figur 5 zusammensetzen.

### Schaltfolge 1 (Figur 1):

### Schaltung der Prozesse zur Herstellung leichtsiedender Komponenten und zur Abscheidung von Schwersiedern (Teerprodukte)

Die Schaltfolge integriert den Gaswäscher Gl, den Ölabscheider Al und den Absorber Kl, welche der Durchführung der Prozesse dienen.

In den Absorber Kl, in welchem ein Absorptionsprozess und ein thermischer Prozess zur Molekülspaltung stattfindet, wird ein Gasdampfgemisch eingeleitet und bei einer Temperatur von 400 - 800 °C über ein Koksbett geleitet. Dem Absorptions- und Spaltprozess folgt der Kondensations- und Waschprozess im Gaswäscher Gl, in dem das Gasdampfgemisch mit dem Waschmedium der Leichtsiederschaltung (Schaltfolge 2) beaufschlagt wird, um Komponenten zu kondensieren.

Durch die Gaswäsche werden die über dem Koksbett entstandenen Leichtsieder bei einer Temperatur von 100 - 300 °C im Gasstrom aufgenommen und mit diesem dampfförmig fortgeführt. Die mit dem Waschmedium kondensierbaren Schwersieder (Öl) verlassen den Prozess Gaswäsche, durchströmen die Apparate der Schaltfolge 2 und werden im Abscheider A1 physikalisch von hochviskosen Komponenten und Kokspartikeln befreit, welche erneut dem Absorber Kl im Zusammenhang mit einer vorher durchgeführten Erhitzung unter Druck zugeführt werden.

Die Schaltfolge bewirkt die Erzeugung von leichtsiedenden Komponenten, die Reduzierung der Schwersieder, die Abscheidung von Kokspartikel und die Beseitigung von Schadstoffen, wie z. B. Dioxin und anderen höhermolekularen Stoffen, die im somit konditionierten Waschmedium löslich sind (siehe Schaltfolge 2).

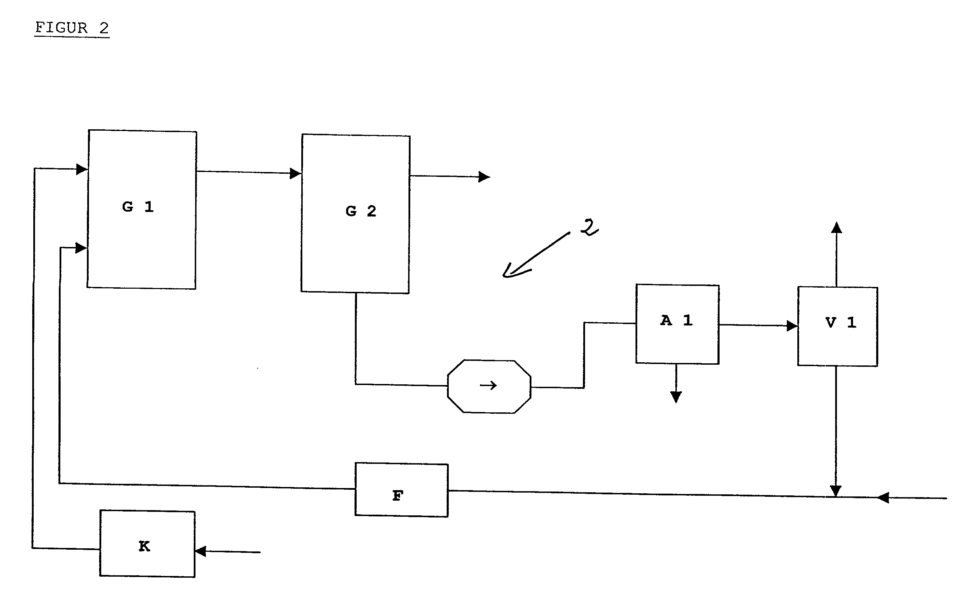

### Schaltfolge 2 (Figur 2):

### Schaltung von Prozessen zur Abscheidung der Leichtsieder (BTEX), Absorption von Schadstoffen

Die Schaltfolge integriert den Gaswäscherprozess Gl mit den o. g. Zustandsmerkmalen, den Gaswäscherprozess G2, der mit einer Temperatur unter 60 °C zu einer weitgehenden Abscheidung aller kondensierbaren Komponenten beiträgt, den Abscheider A2 für den Trennprozess Leichtsieder und Wasser und den Verdampfer V1, der mit einer Temperatur von 100 - 150 °C gefahren wird, für den thermischen Abtrennprozess Wasser - Benzol (bzw. BTEX teilweise).

Die Schaltfolge greift in die Apparateeinheiten der Gaswäscher 1, 2 und 3 ein, integriert damit die zugehörigen Prozesse, die durch die Wärmeübertragung im Apparat Wl und die Abscheidung im Abscheider Al ergänzt werden. Für die Schaltfolge 2 sind diese nicht als Grundoperationen relevant.

Die Schaltfolge hat die Funktion, ein Gas/Dampfgemisch durch den Gaswäscher G1 zu führen, im Wäscher G2 ein Gemisch aus Wasserdampf und Leichtsiederdampf teilweise und im Gaswäscher G2 (mit Ausnahme des Gases) zu kondensieren.

Im Abscheider A2 finden Trennungsprozesse für Wasser und Leichtsieder statt, die auf Dichteunterschieden beruhen. Die abgeschiedenen Leichtsieder durchströmen ausschließlich den Verdampfer V1 und werden hier von Benzol befreit. Anschließend gelangen die kondensierten Leichtsieder in die Schaltfolge 1, in der eine Reduzierung der Viskosität erreicht wird.

Da Heterozyklen und andere Schadstoffe in dem Medium der Schaltfolge 2 löslich sind, gelangen diese mit den Medien in das Koksbett und werden beseitigt. Aus dem Abscheider A2 gelangt die abgeschiedene Wasserkomponente in den Wärmeübertrager W1 und damit die Schaltfolge 3 zu Schadstoffabscheidung von wasserlöslichen Komponenten.

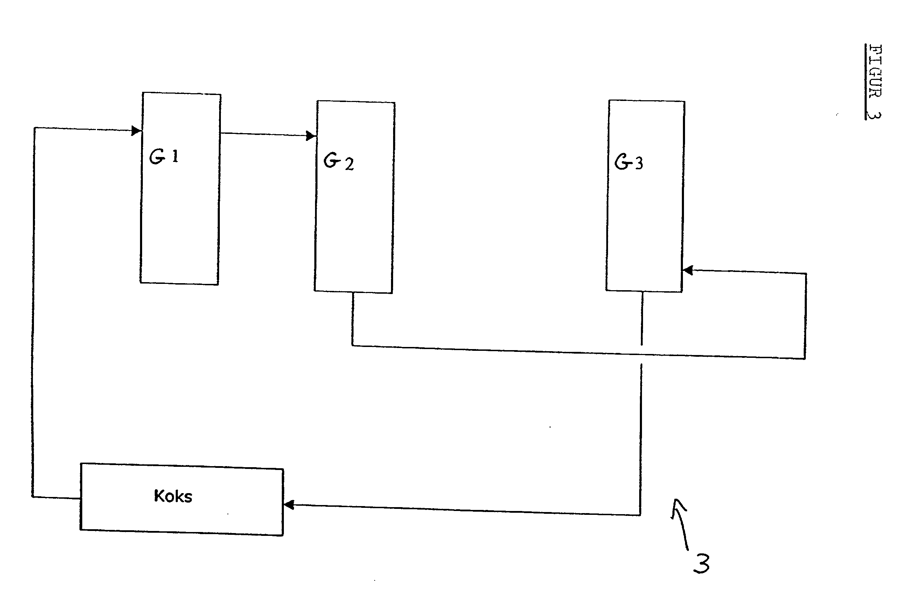

### Schaltfolge 3 (Figur 3):

### Schaltung von Prozessen der Abscheidung von wasserlöslichen Schadstoffen, Emulgatoren und der Wasserausschleusung

Die Schaltfolge integriert die Prozesse in den Gaswäschern G1, G2 und G3, Abscheider A2, Wärmeübertrager W1 und Absorber K1. Der dritte Gaswäscher weist dabei eine Temperatur auf, bei der die mitgeführte Wasserkomponente verdampft.

In der Schaltfolge werden die Komponenten des Mediums, das größtenteils aus Wasser besteht, erst im zweiten Gaswäscher und teilweise im dritten Gaswäscher kondensiert, von hier aus nach dem Abscheider A2 in den Wärmeübertrager W1 eingeleitet und erhitzt. Sie werden einer Verdampfung unterworfen. Dadurch entsteht ein mit Schadstoffen angereicherter Rückstand, der als Teilstrom in den Absorber K1 und in einem zweiten Wärmeübertrager zurückgeführt wird, nachdem er einer Temperaturbehandlung im ersten Wärmeübertrager unterzogen wurde. Durch die Schaltfolge wird bewirkt, dass Benzol vor dem Verdampfungsprozess in der Gaswäschereinheit 3 physikalisch abgeschieden und anschließend aus den niedrigviskosen Leichtsiedern verdampft werden kann und damit die Prozesse der Schaltfolge 4 nicht belastet.

Ferner wird erreicht, dass organische wasserlösliche Schadstoffe, wie z. B. Furan, aus dem Waschmedium ausgeschieden, dem Absorptions-Schaltungsprozess zugeführt und hierbei katalytisch gespalten und damit beseitigt werden.

Aus dem Waschmedium wird durch Wärmezufuhr in den Wärmeübertrager W1, bei Temperaturen von 80 °C bis 110 °C im Gasstrom Leichtsieder und Wasser verdampft. Der Sumpf des ersten Wärmeübertragers W1, in dem sich Schadstoffe anreichern, wird teilweise in einen zweiten Wärmeübertrager W2 eingeleitet und hier bei Temperaturen über 100 °C weiter eingedampft. Der Sumpf aus W2 wird ebenfalls in den Absorber K1 geleitet, während der Dampf kondensiert und der Abwasservorbehandlung zugeführt wird.

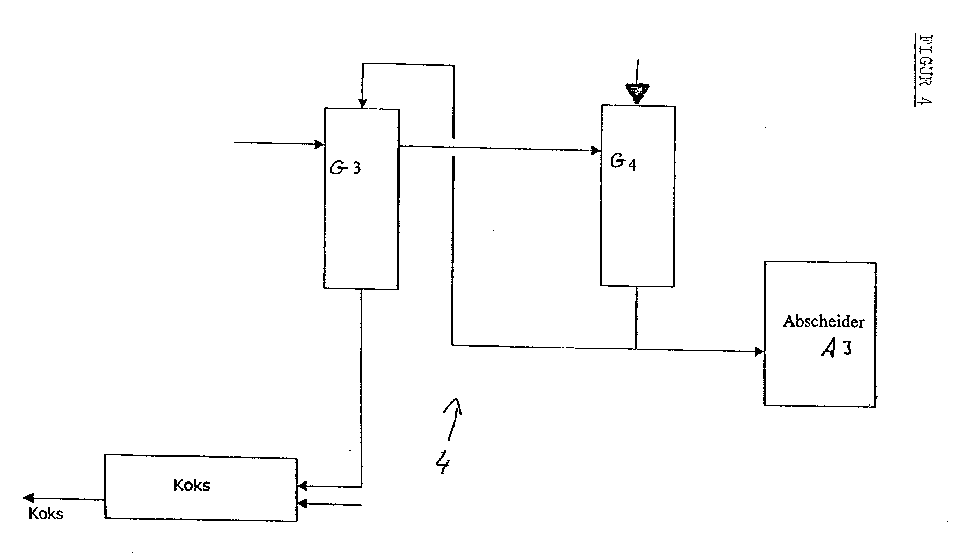

### Schaltfolge 4 (Figur 4):

### Schaltung von Prozessen der Gas/Wasserdampfabscheidung, der Rückführung von flüchtigen organischen Stoffen und der Abscheidung von anorganischen Stoffen, wie z. B. Chloriden

Die Schaltfolge integriert die Prozesse in den Gaswäschereinheiten 3, 4 und eventuell Weiteren, dem Abscheider A3 und dem Absorber K. Ferner sind Wärmeübertragungsprozesse integriert.

Es werden im basischen Milieu restliche Chlorionen in Wasser gelöst. Das Gas und die mitgeführten Wasserund Leichtsiederrestdämpfe werden gekühlt und können durch die Abwesenheit von Emulgatoren, die in der Schaltfolge 3 beseitigt wurden, in einem Abscheider getrennt werden. Die organische Schicht wird in den Absorber K geleitet, das salzhaltige Wasser wird ausgeschleust. Die Wasserzufuhr besorgt die Schaltfolge 5.

### Schaltfolge 5 (Figur 5):

### Schaltung von Prozessen der Gasreinigung und der Wasserdampfabscheidung

Die Schaltfolge besteht aus einer Scrubberreihe, in die Wasser eingedüst und im Kreislauf gefahren wird. Das Medium wird gekühlt und in die Schaltfolge 4 eingespeist.

Generell besteht der folgende Grundsatz, dass in den Gaswäscherprozessen in kurzen Kondensationsstrecken durch Vermischung der hergestellten Ölkondensate mit verdüstem Waschmedium durch Temperaturschock eine Komponente auskondensiert wird, die aufgrund ihrer tröpfchenförmigen Verteilung Kohlenstoffpartikel bindet, um in einen Sammelraum mit den weiteren Komponenten eingetragen, hier abgeschieden und anschließend in fluider Form ausgeschleust zu werden.

So wird auch unter dem Patentanspruch 16 definiert, dass in den Gaswaschprozessen, die einer Gaserzeugungseinrichtung nachgeschaltet sind, in kurzen Kondensationsstrecken von 2 bis 4 m Länge aus einem verunreinigten Gas/Dampfgemisch, das eine Temperatur von 200 bis 500 °C aufweist durch Einsprühen einer Waschflüssigkeit mit einer Temperatur von 60 bis 150 °C das Gas/Dampfgemisch um 50 bis 100 °C abgekühlt und durch Vermischung der dadurch hergestellten Ölkondensate mit dem verdüsten Waschmedium durch Temperaturschock eine Komponente, bestehend aus Paraffinen und Aliphaten auskondensiert wird, die eine Dichte von 1,0 bis 1,3 kg/l aufweist und aufgrund ihrer tröpfchenförmigen Verteilung im Gas/Dampfgemisch Kohlenstoffpartikel mit einem Kornspektrum zwischen 0,01 und 1 mm, jedoch auch bis zu einer Größe von 5 mm bindet, um in einen Sammelraum mit den weiteren Komponenten eingetragen, hier aufgrund der Dichte aus der Mischung durch Absetzen abgeschieden und anschließend in fluider Form ausgetragen zu werden.

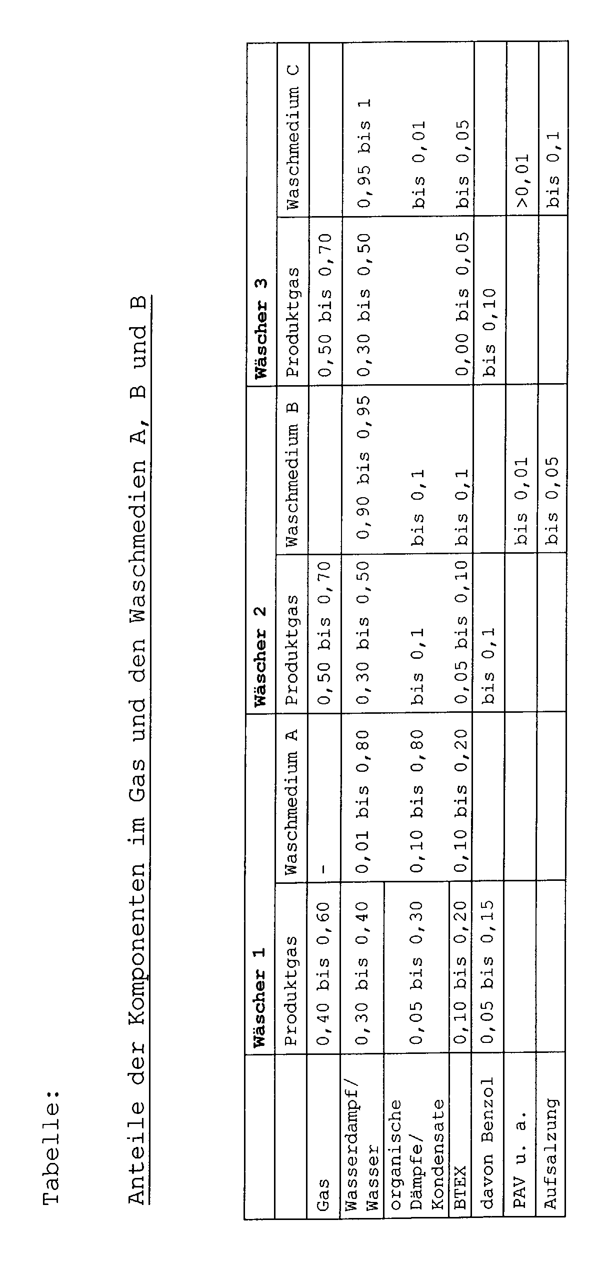

### Bezugszeichen

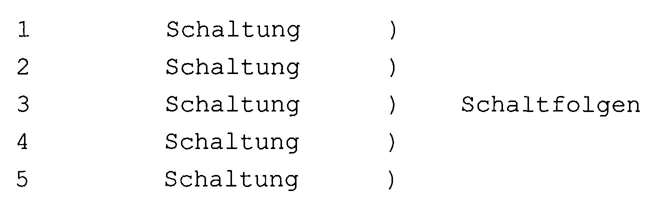

- A1: Abscheideprozess

- V1: Verdampfer

- K: Abscheider

- G1: Gaswäscherprozess
- G2: Gaswäscherprozess
- G3: Gaswäscherprozess
- G4: Gaswäscherprozess

- A: Stoffstrom Schwersieder
- B: Stoffstrom Medium mit Schadstoffen
- C: Stoffstrom Salzlösung

## Patentansprüche

1. Verfahren zur Gasreinigung und zur Abscheidung von dampfförmigen Stoffen aus Gasen und zur Konditionierung der sich dabei bildenden Kondensate als olefin- und aliphathaltige Fraktionen bzw. als Waschmedium in wässriger Lösung **dadurch gekennzeichnet, dass** eine Zusammenschaltung von Schaltfolgen vorgenommen wird, die an Verbindungsstellen der geschalteten Folgen dem Stoffübergang und damit der Konditionierung der Waschmedien bzw. dem Stoffübergang mit dem Produktgas dienen bzw. in dem Verlaufe der Schaltfolgen mit der Durchführung der Grundoperationen, die in den gasförmigen, flüssigen und festen Medien ablaufen und mit einem Zutritt oder Abgang von Komponenten verbunden wird, wobei die Schaltfolge (1), die der Abtrennung von hochviskosen schadstoffhaltigen organischen Komponenten mit Kohlenstoffanteilen dient - Schaltung (1), zusammengeschaltet wird durch den Gaswäscherprozess (Gl) und den physikalischen Abscheideprozess (Al) mit der Prozessfolge für Benzol- und Leichtsiederbehandlung - Schaltung (2), diese Prozessfolge - Schaltung (2) zusammengeschaltet wird durch den Gaswäscherprozess (G2) mit der Prozessfolge zur Ausschleusung der wasserlöslichen Schadstoffe - Schaltung (3), die ihrerseits über den Abscheider (K) mit der Schaltung (1) in Verbindung steht und weiterhin die Ausschleusung - Schaltung (4) durch eine Verbindung in den Gaswäscherprozess (G3) mit der Schaltung (3) in Verbindung steht, wodurch in den Prozessfolgen Komponenten sequentiell abgeschieden, die Waschmedien durch eine Führung im Kreislauf durch Prozessfolgen konditioniert und Schadstoffe ausgeschleust werden.

2. Verfahren nach Anspruch 1 **dadurch gekennzeichnet, dass** Schaltungen von Prozessen auf die Stoffströme wirksam werden, bei denen aus dem Stoffstrom Gas in der Aufeinanderfolge der Stoffstrom A Schwersieder, der Stoffstrom B Medium mit Schadstoffen, der Stoffstrom C Salzlösungen abgeschieden und in der jeweiligen Prozessfolge konditioniert werden.

3. Verfahren nach Anspruch 1 **dadurch gekennzeichnet, dass** die Stoffströme Gas A, B, C, ... sich - wie in der Tabelle angegeben - zusammensetzen.

4. Verfahren nach Anspruch 1 **dadurch gekennzeichnet, dass** der Stoffstrom A Schwersieder, bestehend aus Aliphaten, Olefinen, Paraffine usw., der Kokspartikel enthält, auf eine Temperatur von > 200 °C, vorzugsweise > 300 °C, und auf höheren Druck gebracht wird, in diesem Zustand mit dem schadstoffhaltigen Medium, bestehend aus Öl und/oder Wasserkomponenten, gemischt und dann über ein Koksbett geleitet wird, das eine Temperatur > 400 °C aufweist, um in der Schaltung (1) dem Gaswäscher (Gl) zugeführt zu werden.

5. Verfahren nach Anspruch 1 **dadurch gekennzeichnet, dass** das Kondensat aus dem Wäscher (G2) im Verlauf der Schaltung (2) in einem Abscheider (Al) aufgespalten wird, im Verdampfer (Vl) Leichtsieder abgibt, um anschließend den Wäscher (Gl) durch Einmischen des Mediums in die Schaltung (1) zugeführt zu werden.

6. Verfahren nach Anspruch 1 **dadurch gekennzeichnet, dass** die Schadstoffe in einem Wäscher mit Medium C kondensiert und in Medium C in Abmischung mit Öl absorbiert werden, in dem Medium durch Verdampfung von Wasser angereichert und dann durch die Schaltung (1) ausgeschleust werden.

7. Verfahren nach Anspruch 1 **dadurch gekennzeichnet, dass** das Gas-/Dampfgemisch mit einem Molekulargewicht von ca. 50 bis 250 kg/kmol in inniger Mischung mit den in Kreisläufen gefahrenen Medien mit sequentiellem Lösungsverhalten für flüchtige Stoffe abgekühlt wird, wodurch Kondensatgemische entstehen, die in den folgenden Verfahrensschritten gelöste Stoffe absorbieren.

8. Verfahren nach Anspruch 1 **dadurch gekennzeichnet, dass** die Verfahrensschritte stattfinden
. in einem innigen Öl/Wassergemisch
. in einem innigen Öl/Gas/Wassergemisch
. in einem innigen Wasser/Wasserdampf/Gasgemisch bei Zuführung von Wärme
. in einem innigen Wasser, Lösungsmittel /Gasgemisch, wobei das Lösungsmittel ein aliphatischer Kohlenwasserstoff C6 bis C12 ist.

9. Verfahren nach Anspruch 1 **dadurch gekennzeichnet, dass** die erste Verfahrensstufe ein Öl/Gasgemisch enthält, in das bis zu 0,05 Anteile Kokspartikel eingetragen werden.

10. Verfahren nach Anspruch 1 **dadurch gekennzeichnet, dass** im Gaswäscherprozess (G3) eine Verdampfung von Wasser und Leichtsieder stattfindet.

11. Verfahren nach Anspruch 1 **dadurch gekennzeichnet, dass** Gaswäscherprozess (G3) als Lösungsmittel Olefine und Aliphate enthält.

12. Verfahren nach Anspruch 1 **dadurch gekennzeichnet, dass** die Kondensatströme und Absorptionsmittelströme mindestens zweistufig erhitzt, nach der ersten Stufe von Leichtsiedern befreit und nach der zweiten Stufe auf ein Koksbett gegeben werden.

13. Verfahren nach Anspruch 1 **dadurch gekennzeichnet, dass** aus dem Stoffstrom nach der zweiten Erhitzung ein Lösungsmittel für Aromaten abgeleitet wird.

14. Verfahren nach Anspruch 1 **dadurch gekennzeichnet, dass** ein Crackverfahren integriert ist und eine Spaltung von Aliphaten, Olefinen, Paraffinen und weiteren Stoffen, wie zum Beispiel Heterozyklen, erfolgt.

15. Verfahren nach Anspruch 1 **dadurch gekennzeichnet, dass** eine Benzol-Wasser-Trennung erfolgt.

16. Verfahren nach Anspruch 1 **dadurch gekennzeichnet, dass** in Gaswaschprozessen, die einer Gaserzeugungseinrichtung nachgeschaltet sind, in kurzen Kondensationsstrecken von 2 bis 4 m Länge aus einem verunreinigten Gas/Dampfgemisch, das eine Temperatur von 200 bis 500 °C aufweist durch Einsprühen einer Waschflüssigkeit mit einer Temperatur von 60 bis 150 °C das Gas/Dampfgemisch um 50 bis 100 °C abgekühlt und durch Vermischung der dadurch hergestellten Ölkondensate mit dem verdüsten Waschmedium durch Temperaturschock eine Komponente, bestehend aus Paraffinen und Aliphaten auskondensiert wird, die eine Dichte von 1,0 bis 1,3 kg/l aufweist und aufgrund ihrer tröpfchenförmigen Verteilung im Gas/Dampfgemisch Kohlenstoffpartikel mit einem Kornspektrum zwischen 0,01 und 1 mm, jedoch auch bis zu einer Größe von 5 mm bindet, um in einen Sammelraum mit den weiteren Komponenten eingetragen, hier aufgrund der Dichte aus der Mischung durch Absetzen abgeschieden und anschließend in fluider Form ausgetragen zu werden.
